# FASCICULE DE BREVET EUROPEEN

(11) **EP 1 361 732 B1**
(45) Date de publication et mention de la délivrance du brevet: **11.10.2006**
(21) Numéro de dépôt: 03291090.3
(22) Date de dépôt: 06.05.2003
(51) Int. Cl.: H04M 1/65, H04M 3/533

(54) **Système de messagerie vocale pour réseau de terminaux de téléphonie**
Sprachnachrichtsystem für ein Netzwerk von Telephonendgeräten
Voice messaging system for a telephone terminals network

(30) Priorité: 06.05.2002 FR 0205636
(43) Date de publication de la demande: 12.11.2003
(73) Titulaire: SAGEM Communication, 75015 Paris (FR)
(72) Inventeur: Conneau, Jérôme, 92400 Courbevoie (FR)
(74) Mandataire: David, Daniel

(56) Documents cités:
- EP-A- 1 199 870
- DE-A- 10 032 239
- US-A- 4 941 203
- US-A- 5 995 824
- US-B1- 6 240 299

## Description

L'invention concerne les terminaux téléphoniques et les services de répondeur de réseaux téléphoniques filaires.

Ce type de service est actuellement très répandu dans le domaine des réseaux de radiotéléphonie mobile, comme les réseaux GSM.

Dans ces réseaux, la fonction répondeur est pratiquement exclusivement assurée de façon centralisée par l'opérateur, sous l'appellation de service de messagerie.

Dans les réseaux filaires, cette fonction répondeur était pratiquement exclusivement assurée de façon décentralisée par les terminaux téléphoniques.

Cependant, récemment, certains opérateurs de services téléphoniques ont proposé aux réseaux filaires des services de messagerie vocale s'apparentant beaucoup aux fonctions répondeurs ordinairement intégrées dans ces terminaux.

Par exemple, on y retrouve beaucoup d'options présentes dans un répondeur classique : prise et consultation de messages, indication de la présence de messages, effacement, filtrage d'appel, etc...

Pour accéder à ce type de service, on compose un numéro spécial et on est guidé par un serveur vocal pour agir sur le clavier téléphonique en fonction des options recherchées.

Ainsi, il semble bien que désormais les terminaux téléphoniques, prévus pour être reliés à des réseaux téléphoniques sur lesquels des services de messagerie sont disponibles, ne seront plus équipés de répondeur-enregistreur, à l'instar des téléphones mobiles du type GSM.

On peut cependant s'inquiéter du fait que des enregistrements de communications privées soient effectués et gérés par des systèmes centralisés.

D'autre part, il n'est pas certain qu'une décentralisation totale ou une centralisation totale soit la solution la meilleure.

La demanderesse s'est intéressée à rechercher une solution de compromis meilleure que celles qui sont actuellement proposées.

A cet effet, l'invention concerne un système de messagerie vocale pour réseau de terminaux de téléphonie comportant un service de messagerie centralisé utilisable selon une première procédure déterminée et gérée par un opérateur du réseau et au moins un terminal comportant un dispositif répondeur-enregistreur décentralisé utilisable selon une deuxième procédure déterminée et gérée par au moins un abonné de l'opérateur, système caractérisé par le fait que le terminal comprend un moyen de sélection du service de messagerie ou du dispositif répondeur enregistreur.

Ainsi, on peut utiliser soit le répondeur enregistreur du terminal, soit le service de messagerie.

De préférence, le terminal comprend en plus des moyens de simulation pour simuler la première procédure à partir de la seconde procédure.

Alternativement, le terminal comprend des moyens de simulation pour simuler la seconde procédure à partir de la première procédure pour simuler la seconde procédure à partir de la première procédure.

L'utilisation du service de messagerie est transparente pour l'utilisateur, qui peut ainsi n'avoir qu'une procédure à connaître, celle du dispositif répondeur enregistreur de son terminal ou celle du service de messagerie centralisé.

Avantageusement, le terminal comprend aussi des moyens d'appel direct du service de messagerie.

Avantageusement encore, les moyens d'appel direct du service de messagerie comportent des moyens d'affichage de numéros d'appel et/ou de numéros de fonctions du service de messagerie centralisé.

Ordinairement, parmi les fonctions du service de messagerie, figurent notamment des options de consultation et d'effacement des messages, de personnalisation d'accueil, de filtrage d'appel.

Aussi, avantageusement toujours, les moyens d'appel direct du service de messagerie appellent automatiquement les numéros d'appel et de fonction du filtrage d'appel du service de messagerie si une option de filtrage d'appel a été choisie et quand le service de messagerie est prêt.

Outre le fait que ce moyen d'appel direct permet quand même, en cas de difficulté passagère, de faire appel au service de messagerie sans passer par le répondeur enregistreur local, il permet d'utiliser facilement la fonction filtrage d'appel classique.

Dé préférence, les moyens de sélection, les moyens de simulation, le moyen d'appel direct du service de messagerie sont des fonctions logicielles.

Cette option de conception est à la fois plus souple et moins coûteuse.

Avantageusement, il est prévu un microprocesseur qui comporte un module de téléchargement de logiciel dans une mémoire de téléchargement et un module de substitution de programmes et de données.

Il est ainsi possible de télécharger la mise à jour des fonctions du microprocesseur du terminal, et notamment celles concernant le système de messagerie.

Avantageusement encore, le module de téléchargement est agencé pour récupérer les messages reçus par le service de messagerie centralisé et le module de substitution est agencé pour mémoriser ces messages dans le module enregistreur.

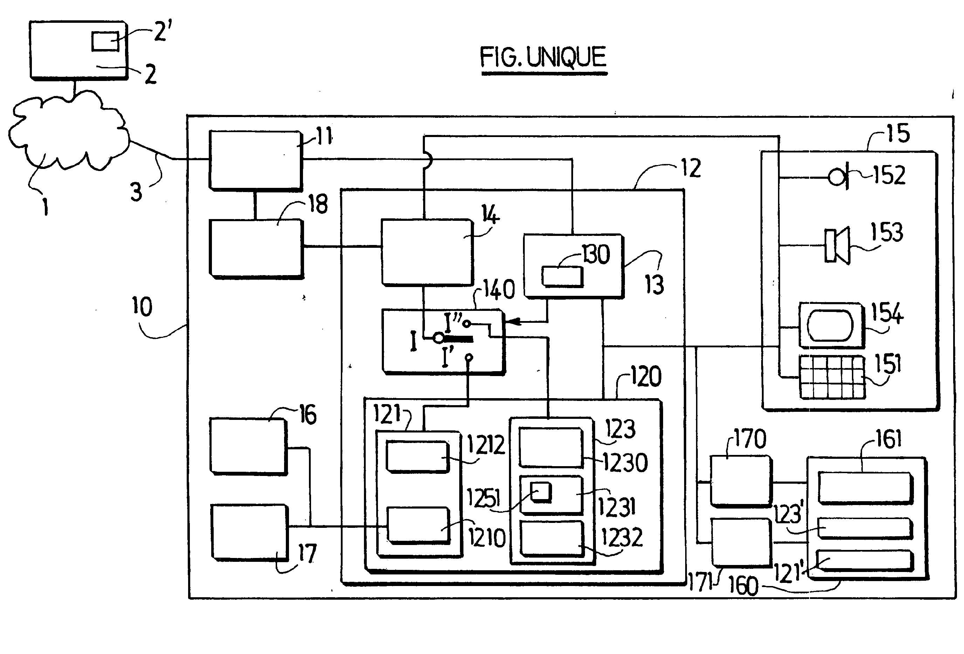

L'invention sera mieux comprise à l'aide de la description suivante et de la figure unique l'accompagnant et représentant le terminal par blocs fonctionnels, selon une forme préférée de réalisation de l'invention.

En référence à la figure annexée, le terminal 10 est relié à au moins un service 2 de messagerie en ligne d'un réseau public 1 du type RTC, par une liaison 3, ici, filaire.

Il comporte une interface de ligne 11 reliant la ligne 3 à un modem 18.

Dans le cas d'un réseau de type GSM, l'interface 11 et le modem 18 seraient remplacés par un émetteur récepteur.

Le terminal comporte en plus, de façon classique, un microprocesseur 12 pour assurer les fonctions de télécommunication ordinaires 14 notamment les traitements numériques permettant le codage/décodage des données vocales entre le modem 18 et les transducteurs d'une interface utilisateur 15, un microphone 152 et au moins un haut-parleur 153. L'interface utilisateur 15 comprend aussi un écran 154 et un clavier 151. Le microprocesseur est aussi relié à une mémoire 160 de données et de programmes par l'intermédiaire d'un module 170 de téléchargement et d'un module 171 de substitution de données et/ou de programmes et à un module répondeur 16 et un .module enregistreur 17.

Le microprocesseur 12 comporte des moyens de contrôle 13, essentiellement une fonction superviseur, pour contrôler les modules externes au microprocesseur abordés précédemment et les fonctions internes au microprocesseur, notamment les fonctions de télécommunication 14 ci-dessus.

Le microprocesseur 12 comporte enfin, ici, une fonction messagerie 120 contrôlée par la fonction superviseur, reliée aux modules répondeur 16 et enregistreur 17, aux modules de téléchargement 170 et de substitution 171, à l'interface utilisateur 15, et aux fonctions de télécommunication 14 par l'intermédiaire d'un module d'aiguillage 140 contrôlé par un module de sélection 130 du superviseur 13. Le module d'aiguillage 140 a été symbolisé par une interface I connectable sur deux positions I' et I".

Lorsque I est sur la position I', les fonctions de télécommunication 14 sont reliées à une fonction répondeur-enregistreur local 121 de la fonction messagerie 120, utilisable selon une procédure locale mémorisée sous forme d'un langage interprétable dans une mémoire 121', partie de la mémoire de données et de programmes 160, et mise en oeuvre par un module de simulation 1210 interpréteur du langage interprétable ci-dessus selon les options choisies grâce à un module de sélection d'option 1212 pour sélectionner des options d'utilisation de la fonction répondeur-enregistreur local 121.

Lorsque I est sur la position I", les fonctions de télécommunication 14 sont reliées à une fonction répondeur-enregistreur distant 123 d'exploitation du service de messagerie 2 selon une procédure 2' mémorisée dans une mémoire 123' de la mémoire 160 sous la forme du même langage interprétable ci-dessus et simulée par un module de simulation 1230 interpréteur du langage interprétable ci-dessus.

Le langage interprétable est du type langage de contrôle de commande exécutable par un interpréteur comme l'est par exemple tout langage de simulation ou de système temps réel.

La fonction répondeur-enregistreur distant 123 comporte également un module d'appel direct 1231 pour numéroter automatiquement le numéro d'appel du service de messagerie 2 et pour afficher les numéros par un module 1251 d'affichage inclus dans le module d'appel.

La fonction 123 comporte enfin un module 1232 de sélection d'options pour sélectionner les options du service de messagerie.

Le fonctionnement de l'invention va maintenant être décrit.

Lorsqu'un utilisateur décide d'initialiser son terminal, il a le choix entre plusieurs possibilités offertes par un menu du module de sélection 130 affiché sur l'écran 154 par la fonction de supervision 13, par exemple sous la forme du tableau :
1) répondeur-enregistreur local ?
   - (1a) : procédure locale
   - (1b) : procédure distante
2) répondeur-enregistreur distant ?
   - (2a) : procédure locale
   - (2b) : procédure distante

Ce tableau signifie que s'il choisit un répondeur-enregistreur local, le module de sélection 130 positionnera I de l'aiguillage 140 sur la position I', et s'il choisit un répondeur-enregistreur distant, le module de sélection le positionnera sur la position I".
i) Dans le premier cas, le terminal 10 utilise son répondeur-enregistreur 121 et ses transducteurs 16, 17 en ignorant complètement le service de messagerie en ligne 2, la fonction répondeur-enregistreur local 121 étant connectée directement aux fonctions de télécommunication 14 par l'interface I et à l'interface utilisateur 14.
   Dans ce premier cas, la procédure d'utilisation peut être, si l'utilisateur souhaite l'option (1a), celle du terminal 10 et mémorisée ordinairement par exemple en mémoire 160 mais peut aussi, si l'utilisateur choisit la solution (1b), être la procédure mémorisée dans la mémoire 121', partie de la mémoire 160. Suivant l'option choisie, la mémoire 121', ou la mémoire 160, est chargée dans le module 1212 de sélection d'option via le module de substitution 171 sur commande du superviseur 13.
   Lors d'une utilisation de la fonction répondeur enregistreur local 121, le module de simulation 1210 exécute la procédure mémorisée dans le module de sélection d'options 1212, pour soit initialiser des options internes à cette procédure en liaison avec l'interface utilisateur 15, soit réagir à un appel entrant non décroché, comme habituellement.
   Cependant, la procédure mémorisée en mémoire 1212 doit provoquer la commande de décroché du terminal 10, pour déclencher le fonctionnement du répondeur 16, avant que le service de messagerie 2 ne soit prêt, c'est-à-dire avant que le service de messagerie 2 ne se déclenche lui-même.
   Pour cela, la fonction de supervision 13 est reliée à l'interface de ligne 11, et compte le nombre de sonneries, qu'il transmet en temps réel au module de simulation 1210 de la fonction répondeur-enregistreur 121, et ce module déclenche le fonctionnement du répondeur 16 dès que ce nombre de sonneries est au plus égal à N-1, N étant le nombre, prédéterminé, de sonneries au terme duquel le service de messagerie 2 est déclaré prêt et se déclenche.
ii) Dans le second cas, le terminal 10 utilise le service de messagerie en ligne 2, en ignorant complètement le dispositif répondeur-enregistreur local 121, 16, 17, la fonction répondeur-enregistreur distant 123 étant reliée directement aux fonctions de télécommunication 14 par l'interface I.

Dans ce second cas, la procédure d'utilisation peut être, si l'utilisateur souhaite l'option (2b), celle 2' du service de messagerie en ligne 2, auquel cas tout se passe comme s'il n'y avait pas, pour le superviseur 13, de module de sélection d'option 1232, ni même de fonction de répondeur-enregistreur local, sauf l'utilisation possible d'un module d'appel direct 1231 pour numéroter automatiquement les options choisies et présentées par le module de simulation 1230 sur l'écran 154 de l'interface utilisateur 15.

Mais cette procédure d'utilisation peut être, par le choix de l'option (2a), celle de la procédure locale. Ici, le module de sélection d'options 1232 contient, après initialisation par l'utilisateur, la procédure 2' mémorisée dans la mémoire 123' sous forme d'un langage interprétable par le module de simulation 1230.

Dans ce second cas, toujours, si l'utilisateur choisit la procédure locale, il peut bénéficier de l'option filtrage d'appel du service de messagerie centralisé 2 grâce au compteur de sonneries de la fonction superviseur 13. En effet, si cette option est choisie de façon prédéterminée par l'interface utilisateur 15, option mémorisée dans le module de sélection d'options 1232 validable par le clavier 151 au moment de l'appel, et quand le service de messagerie 2 est prêt, c'est-à-dire quand le nombre N de sonneries est atteint, alors le service de messagerie 2 décroche et enregistre le message du correspondant appelant et simultanément le superviseur 13 communique le nombre N de sonneries au module de simulation 1230 qui, compte tenu de l'option prise, commande automatiquement au module d'appel direct 1231 de décrocher, d'appeler par numérotation automatique le service de messagerie 2 et d'adresser la fonction filtrage d'appel de ce service par la simulation DTMF de l'appui de la touche du clavier 151 qui correspond à cette adresse.

On aura noté que les procédures mémorisées en mémoires 121' et 123' sont utilisées dans le cadre de la mise en oeuvre des options (1b) (répondeur-enregistreur local avec procédure distante) et (2a) (répondeur-enregistreur distant avec procédure locale) respectivement.

Ces procédures n'effectuent en fait qu'une traduction de l'expression sur l'interface utilisateur 15 de l'une ou de l'autre des procédures, locale ou distante, en une expression de l'une ou de l'autre des procédures, distante ou locale, respectivement.

Par expression, on entend aussi bien expression visuelle sur l'écran 154, qu'expression sonore sur le haut-parleur 153, en sortie, expression manuelle sur le clavier 151, en entrée.

Cette traduction est obtenue simplement par l'utilisation dans un sens ou dans l'autre, d'une table d'équivalences mémorisée en mémoire 160 et jointe aux langages interprétables des mémoires 121' et 123' lors de leur transfert dans les modules de sélection d'options 1212 et 1232.

L'invention est applicable pour tout type de terminal, portable ou non, radio ou filaire.

Elle est d'autant plus intéressante qu'elle peut être mise en oeuvre de sorte qu'une évolution des services de messagerie en ligne puisse être répercutée sur le terminal sans qu'il soit nécessaire de rappeler ce dernier dans un centre de mise à jour. Pour cela, on prévoit, dans l'invention, un dispositif complémentaire de téléchargement en ligne de logiciels et de données comportant un module de téléchargement 170 capable d'une telle opération, sous le contrôle du superviseur 13, d'une mémoire de téléchargement 161, partie de la mémoire 160, pour recevoir les logiciels exécutables et les données par téléchargement, et d'un module de substitution de logiciels 171 capable de remplacer les fonctions logicielles et leurs modules de la fonction messagerie locale 120 par les fonctions logicielles évoluées situées dans la mémoire 161 aux adresses mémoires- correspondantes de la fonction messagerie 120.

Naturellement, le module 170 peut télécharger des données vocales issues des messages enregistrés par le service de messagerie centralisé, les stocker en mémoire 161, et le module de substitution 171 peut remplacer ou ajouter ces messages dans une mémoire du module enregistreur 17.

Bien que, actuellement, les téléphones cellulaires ne comportent généralement pas de dispositifs répondeur-enregistreur, rien n'empêche techniquement de concevoir la mise en oeuvre de l'invention dans ce type de téléphone.

## Revendications

1. Système de messagerie vocale pour réseau (1) de terminaux de téléphonie comportant un service de messagerie centralisé (2) utilisable selon une première procédure (2') déterminée et gérée par un opérateur du réseau et au moins un terminal (10) comportant un dispositif répondeur-enregistreur (120, 16, 17) décentralisé utilisable selon une deuxième procédure (121') déterminée et gérée par au moins un abonné de l'opérateur, système **caractérisé par le fait que** le terminal comprend un moyen de sélection (130, 140) du service de messagerie (2) ou du dispositif répondeur enregistreur.

2. Système de messagerie vocale selon la revendication 1, dans lequel le terminal comprend en plus des moyens (1210) de simulation pour simuler la première procédure (2') à partir de la seconde procédure (121').

3. Système de messagerie vocale selon la revendication 1, dans lequel le terminal comprend des moyens (1230) de simulation pour simuler la seconde procédure (121') à partir de la première procédure (2').

4. Système de messagerie vocale selon l'une des revendications 1 à 3, dans lequel le terminal comprend aussi des moyens (1231) d'appel direct du service de messagerie.

5. Système de messagerie vocale selon la revendication 4, dans lequel les moyens d'appel direct (1231) du service de messagerie comportent des moyens d'affichage (1251) de numéros d'appel et/ou de numéros de fonctions du service de messagerie centralisé.

6. Système de messagerie vocale selon l'une des revendications 4 et 5, dans lequel les moyens d'appel direct du service de messagerie appellent automatiquement les numéros d'appel et de fonction du filtrage d'appel du service de messagerie si une option de filtrage d'appel a été choisie et quand le service de messagerie est prêt.

7. Système de messagerie vocale selon l'une des revendications 4 à 6, dans lequel les moyens de sélection (130, 140), les moyens de simulation (1210, 1230), le moyen d'appel direct (1231) du service de messagerie (2) sont des fonctions logicielles.

8. Système de messagerie vocale selon l'une des revendications 4 à 7, dans lequel il est prévu un microprocesseur (12) qui comporte un module de téléchargement (170) de logiciel dans une mémoire de téléchargement (161) et un module de substitution (171) de programmes et de données.

9. Système de messagerie vocale selon la revendication 8, dans lequel le module de téléchargement (170) est agencé pour récupérer les messages reçus par le service (2) de messagerie centralisé et le module de substitution (171) est agencé pour mémoriser ces messages dans le module enregistreur (17).

10. Système de messagerie vocale selon l'une des revendications 1 à 9, dans lequel le terminal (10) est un téléphone cellulaire.

## Claims

1. Voice messaging system for a network (1) of telephony terminals, comprising a centralised messaging service (2), which can be used according to a first procedure (2') determined and managed by an operator of the network, and at least one terminal (10) comprising a decentralised answering/recording unit (120, 16, 17) which can be used according to a second procedure (121') determined and managed by at least one subscriber of the operator, a system **characterised in that** the terminal includes a means for selecting (130, 140) the messaging service (2) or the answering/recording unit.

2. Voice messaging system according to claim 1, wherein the terminal also includes simulation means (1210) for simulating the first procedure (2') from the second procedure (121').

3. Voice messaging system according to claim 1, wherein the terminal includes simulation means (1230) for simulating the second procedure (121') from the first procedure (2').

4. Voice messaging system according to one of claims 1 to 3, wherein the terminal also includes means (1231) for directly calling the messaging service.

5. Voice messaging system according to claim 4, wherein the means (1231) for directly calling the messaging service include means (1251) for displaying call numbers and/or function numbers of the centralised messaging service

6. Voice messaging system according to one of claims 4 and 5, wherein the means for directly calling the messaging service automatically call the call number and the call filtering function number of the messaging service if a call filtering option has been selected and when the messaging service is ready.

7. Voice messaging system according to one of claims 4 to 6, wherein the selection means (130, 140), the simulation means (1210, 1230), the means (1231) for directly calling the messaging service (2) are software functions.

8. Voice messaging system according to one of claims 4 to 7, wherein a microprocessor (12) is provided which includes a software downloading module (170) in a downloading memory (161) and a program and data substitution module (171).

9. Voice messaging system according to claim 8, wherein the downloading module (170) is arranged to retrieve the messages received by the centralised messaging service (2) and the substitution module (171) is arranged to store these messages in the recording module (17).

10. Voice messaging system according to one of claims 1 to 9, wherein the terminal (10) is a cellular telephone.

## Patentansprüche

1. Sprachnachrichtenübermittlungssystem für Netz (1) von Telefongeräten, mit einem zentralisierten Nachrichtenübermittlungsdienst (2), der gemäß einem vorgegebenen und von einem Betreiber des Netzes verwalteten ersten Verfahren (2') verwendbar ist, und mit wenigstens einem Endgerät (10) mit einer dezentralisierten Anrufbeantwortervorrichtung (120, 16, 17) mit Rufaufzeichnung, die gemäß einem vorgegebenen und von wenigstens einem Teilnehmer des Betreibers verwalteten zweiten Verfahren (121') verwendbar ist, wobei das System **dadurch gekennzeichnet ist, daß** das Endgerät ein Mittel (130, 140) zur Auswahl des Nachrichtenübermittlungsdienstes (2) oder der Anrufbeantwortervorrichtung mit Rufaufzeichnung aufweist.

2. Sprachnachrichtenübermittlungssystem nach Anspruch 1, wobei das Endgerät ferner Simulationsmittel (1210) aufweist, um das erste Verfahren (2') ausgehend vom zweiten Verfahren (121') zu simulieren.

3. Sprachnachrichtenübermittlungssystem nach Anspruch 1, wobei das Endgerät Simulationsmittel (1230) aufweist, um das zweite Verfahren (121') ausgehend vom ersten Verfahren (2') zu simulieren.

4. Sprachnachrichtenübermittlungssystem nach einem der Ansprüche 1 bis 3, wobei das Endgerät auch Mittel (1231) zum Direktruf des Nachrichtenübermittlungsdienstes aufweist.

5. Sprachnachrichtenübermittlungssystem nach Anspruch 4, wobei die Mittel (1231) zum Direktruf des Nachrichtenübermittlungsdienstes Mittel (1251) zur Anzeige von Rufnummern und/oder von Funktionsnummern des zentralisierten Nachrichtenübermittlungsdienstes aufweisen.

6. Sprachnachrichtenübermittlungssystem nach einem der Ansprüche 4 und 5, wobei die Mittel zum Direktruf des Nachrichtenübermittlungsdienstes die Rufnummern und Anruffilterfunktionsnummern des Nachrichtenübermittlungsdienstes automatisch anrufen, wenn eine Anruffilteroption gewählt wurde und der Nachrichtenübermittlungsdienst bereit ist.

7. Sprachnachrichtenübermittlungssystem nach einem der Ansprüche 4 bis 6, wobei die Auswahlmittel (130, 140), die Simulationsmittel (1210, 1230), die Mittel (1231) zum Direktruf des Nachrichtenübermittlungdienstes (2) Softwarefunktionen sind.

8. Sprachnachrichtenübermittlungssystem nach einem der Ansprüche 4 bis 7, wobei ein Mikroprozessor (12) vorgesehen ist, der ein Modul (170) zum Fernladen von Software in einen Fernladespeicher (161) und ein Modul (171) zur Substitution von Programmen und von Daten aufweist.

9. Sprachnachrichtenübermittlungssystem nach Anspruch 8, wobei das Fernlademodul (170) eingerichtet ist, um die von dem zentralisierten Nachrichtenübermittlungsdienst (2) empfangenen Nachrichten wiederzugewinnen, und wobei das Substitutionsmodul (171) eingerichtet ist, umd diese Nachrichten in dem Aufzeichnungsmodul (17) zu speichern.

10. Sprachnachrichtenübermittlungssystem nach einem der Ansprüche 1 bis 9, wobei das Endgerät (10) ein zellulares Telefon ist.
